(19) Europäisches Patentamt

European Patent Office

Office européen des brevets

(11) Veröffentlichungsnummer: **0 238 891**
B1

(12) **EUROPÄISCHE PATENTSCHRIFT**

(45) Veröffentlichungstag der Patentschrift:
02.05.90

(51) Int. Cl.⁴: **B60G 17/04**

(21) Anmeldenummer: 87102888.2

(22) Anmeldetag: 28.02.87

(54) Entlastung der Nachlaufachse bei einem Doppelachsenfahrzeug.

(30) Priorität: 22.03.86 DE 3609843

(43) Veröffentlichungstag der Anmeldung:
30.09.87 Patentblatt 87/40

(45) Bekanntmachung des Hinweises auf die Patenterteilung:
02.05.90 Patentblatt 90/18

(84) Benannte Vertragsstaaten:
DE FR IT SE

(56) Entgegenhaltungen:
DE-A- 2 026 547
DE-A- 2 425 880
FR-A- 2 177 784
FR-A- 2 279 580

(73) Patentinhaber: ROBERT BOSCH GMBH, Postfach 50,
D-7000 Stuttgart 1(DE)

(72) Erfinder: Fahrnschon, Matthias, Dipl.-Ing.,
Sommerhaldenstrasse 48, D-7000 Stuttgart 1(DE)

## Beschreibung

### Stand der Technik

Die Erfindung geht aus von einer Vorrichtung zur Entlastung der Nachlaufachse eines luftgefederten Fahrzeuges. Bei Fahrzeugen, insbesondere Nutzfahrzeugen, mit einer Doppel- bzw. Tandemachse wird in den meisten Fällen die eine der beiden Hinterachsen angetrieben, während die andere der beiden Hinterachsen als mitlaufende Achse keine Antriebsfuntion aufweist. In den meisten Fällen wird die vordere zweier Hinterachsen angetrieben, jedoch muß dies nicht so sein. Im folgenden soll deshalb unter "Nachlaufachse" jene Achse verstanden werden, welche nicht angetrieben ist.

Beim Anfahren eines derartigen Fahrzeuges kann es zu einem Durchdrehen der Antriebsräder aufgrund mangelnder Haftreibung kommen. Es sind bereits Vorrichtungen bekannt, bei denen, um einem mangelnden Kraftschluß der Antriebsachse entgegenzuwirken, während des Anfahrens der Druck in den Federbälgen der Nachlaufachse vermindert wird, um so den Druck in den Federbälgen der Antriebsachse und damit die Haftreibungskraft der Antriebsräder zu erhöhen. Es ist bereits eine gattungsgemäße Vorrichtung bekannt, bei welcher zu diesem Zweck mittels eines ersten Ventiles die Druckluftkreise von Antriebsachse und Nachlaufachse voneinander getrennt werden und gleichzeitig über ein zweites Ventil Druckluft aus dem Druckluftkreis der Nachlaufachse abgelassen wird. Dies bewirkt eine höhere Belastung der Antriebsachse, wobei diese Belastung aber einen bestimmten, auch gesetzlich festgelegten Schwellenwert nicht überschreiten darf. Ist dieser Wert erreicht, so schließt das zweite Ventil; der Druck im Druckluftkreis der Nachlaufachse sinkt nicht weiter ab, ein unzulässig hoher Druckanstieg im Druckluftkreis der Antriebsachse wird vermieden. Nach einer - ebenfalls gesetzlich vorgeschriebenen - Frist schaltet die Vorrichtung wieder in den ursprünglichen Zustand zurück; beide Achsen weisen wieder die gleiche Lastverteilung wie zuvor auf.

Nachteilig bei der beschriebenen Vorrichtung ist es, daß zwei Steuerventile benötigt werden.

### Vorteile der Erfindung

Die erfindungsgemäße Vorrichtung zur Entlastung der Nachlaufachse eines luftgefederten Fahrzeuges mit den kennzeichnenden Merkmalen des Hauptanspruchs hat demgegenüber den Vorteil, mit nur einem Steuerventil auszukommen. Dem steht ein nur geringer Mehraufwand in der elektronischen Ansteuerung entgegen. Auch der leicht erhöhte Luftverbrauch mindert nicht den Vorteil der vorgeschlagenen Vorrichtung, da deren Arbeitsdauer zeitlich begrenzt ist und die Vorrichtung auch nicht zu häufig benutzt wird.

Durch die in den Unteransprüchen aufgeführten Maßnahmen sind vorteilhafte Weiterbildungen und Verbesserungen der im Hauptanspruch angegebenen Vorrichtung zur Entlastung der Nachlaufachse eines luftgefederten Fahrzeuges möglich.

### Zeichnung

Ein Ausführungsbeispiel der Erfindung ist in der Zeichnung vereinfacht dargestellt und in der nachfolgenden Beschreibung näher erläutert. Figur 1 zeigt ein Funktionsschaubild einer erfindungsgemäßen Vorrichtung, Figur 2 den Druckverlauf über der Zeit im Druckluftsystem der Antriebsachse bei Betätigung der Vorrichtung, Figur 3 den Druckverlauf über der Zeit im Druckluftsystem der Nachlaufachse bei Betätigung der Vorrichtung.

### Beschreibung des Ausführungsbeispieles

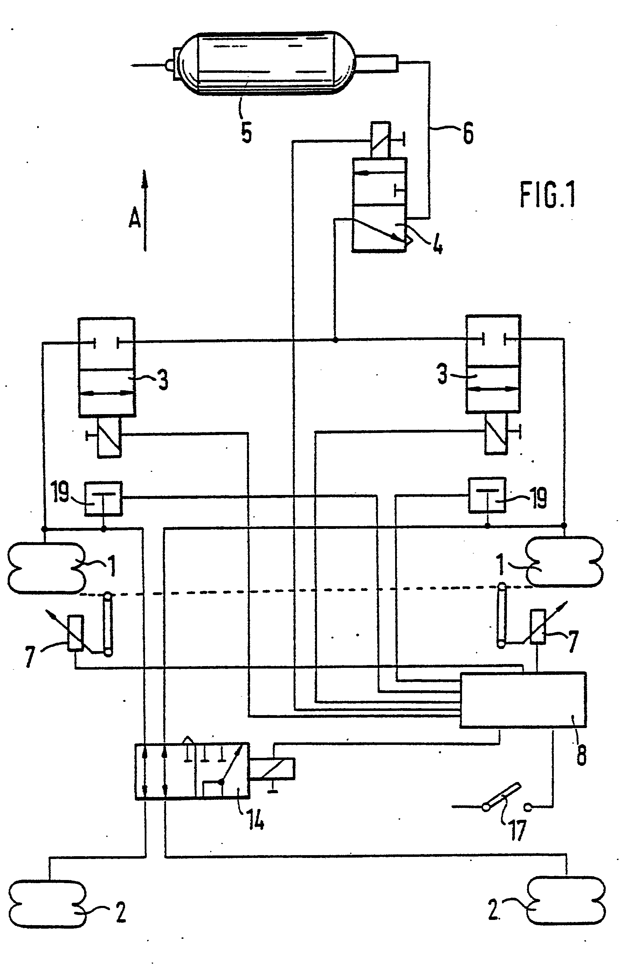

In Figur 1 ist ausschnittsweise ein Luftfederungssystem, vorzugsweise für ein Nutzfahrzeug, gezeigt, welches eine erfindungsgemäße Vorrichtung zur Entlastung der Nachlaufachse aufweist. Mit dem Bezugszeichen 1 sind beiderseits der Fahrzeuglängsachse angeordnete, ein federndes Luftpolster zwischen Antriebsachse und Fahrzeugaufbau bildende Bälge der Antriebsachse bezeichnet. In Fahrtrichtung (A) hinter den Bälgen 1 der Antriebsachse befinden sich ein federndes Luftpolster zwischen Nachlaufachse und Fahrzeugaufbau bildende Bälge 2 der Nachlaufachse. In der Figur 1 nicht dargestellt sind die Bälge der Vorderachse. Die Bälge 1 der Antriebsachse stehen unter Zwischenschaltung jeweils eines Niveauregelventils 3 und eines Entlüftungsventils 4 mit der Austrittsöffnung eines Druckvorratsbehälters 5 über eine Versorgungsleitung 6 in Verbindung.

Im Druckvorratsbehälter 5 herrscht ein Druck, welcher größer ist als der Druck innerhalb des Luftfederungssystems. Durch die Niveauregelventile 3 kann auf an sich bekannte Weise die Höhe des Luftdrucks in den Bälgen 1 der Antriebsachse in Abhängigkeit von dem Abstand zwischen Rad und Fahrzeugaufbau erhöht werden. In der dargestellten und beschriebenen Ausführungsform wird durch das Niveauregelventil 3 einer jeden Fahrzeugseite der Luftdruck im Balg 1 der Antriebsachse der jeweiligen Fahrzeugseite gesteuert. Ist der jeweilige Abstand zwischen Rad und Fahrzeugaufbau zu gering, so wird im Niveauregelventil 3 ein Strömungsquerschnitt freigegeben, so daß Luft vom Druckvorratsbehälter 5 über die Versorgungsleitung 6 und das Entlüftungsventil 4 in den jeweiligen Balg 1 der Antriebsachse strömen kann. Hierzu wird das Niveauregelventil 3 in seine eine Stellung gebracht, während in der anderen Stellung des Niveauregelventils 3 (in Figur 1 dargestellt) keine Verbindung zwischen dem Druckvorratsbehälter 4 und dem jeweiligen Balg 1 der Antriebsachse besteht. Ist der jeweilige Abstand zwischen Rad und Fahrzeugaufbau zu groß, so kann über das Entlüftungsventil 4 Luft aus den Bälgen an die Atmosphäre abgegeben werden. Dazu werden gleichzeitig die Nivauregelventile 3 geöffnet. Zur Ermittlung des Abstandes zwischen Rad ung Fahrzeugaufbau können am Fahrzeugaufbau oder an der Antriebsachse angebrachte Wegsensoren 7 Verwendung finden. Die Wegsensoren 7 erzeugen ein elektrisches Signal, welches einer elektronischen Steuereinheit 8 zugeführt wird. Die elektronische Steuereinheit 8 wiederum erzeugt Signale, über welche die Niveauregelventile 3 und das Entlüftungsventil 4 angesteuert werden.

Die Bälge 1 der Antriebsachse und die Bälge 2 der Nachlaufachse sind jeweils miteinander durch ein Steuerventil 14 verbindbar. Dabei ist es sowohl möglich, für jede Fahrzeugseite ein Steuerventil 14 vorzusehen, als auch ein für beide Fahrzeugseiten gemeinsames Steuerventil 14. Der letztgenannte Fall ist in Figur 1 dargestellt. Das Steuerventil 14 ist in zwei Stellungen schaltbar. In der ersten Stellung werden die Bälge 1 der Antriebsachse und die Bälge 2 der Nachlaufachse einer jeden Fahrzeugseite jeweils miteinander verbunden, weisen also den gleichen Druck auf. In der zweiten Stellung des Steuerventils 14 werden linker und rechter Balg 2 der Nachlaufachse miteinander und mit der Atmosphäre verbunden, d.h. der Druck in den Bälgen 2 der Nachlaufachse wird abgelassen. In dieser zweiten Stellung des Steuerventils 14 werden die mit den Bälgen 1 der Antriebsachse verbundenen Leitungen durch das Steuerventil 14 abgesperrt, d.h. es tritt kein Luftverlust in den Bälgen 1 der Antriebsachse ein. Vorteilhafterweise wird das Steuerventil 14 als 5/2-Ventil ausgeführt. Voraussetzung zur Verwendung eines solchen 5/2-Ventils ist dessen schnelle Schaltbarkeit und damit eine hohe erreichbare Schaltfrequenz. Das Schaltsignal empfängt das Steuerventil 14 dabei ebenfalls von der elektronischen Steuereinheit 8.

Da in der ersten Stellung des Steuerventils 14 (welche in Figur 1 dargestellt ist), die Bälge 1 der Antriebsachse und die Bälge 2 der Nachlaufachse einer jeden Fahrzeugseite miteinander in Verbindung stehen, weisen beiden Bälge den gleichen Luftdruck auf. Im normalen Fahrbetrieb eines mit der erfindungsgemäßen Vorrichtung ausgestatteten Fahrzeuges wird diese erste Stellung des Steuerventils 14 eingenommen, so daß Antriebsachse und Nachlaufachse des Fahrzeuges in gewünschtem Verhältnis durch die Fahrzeug- bzw. Nutzlast beaufschlagt sind.

Die Betätigung der erfindungsgemäßen Vorrichtung zur Entlastung der Nachlaufachse eines luftgefederten Fahrzeuges erfolgt mittels eines handbetätigten Schalters 17 durch den Fahrzeuglenker immer dann, wenn als Folge mangelnder Reibung zwischen den Fahrzeugreifen der Antriebsachse und dem Fahruntergrund mindestens einer der Reifen der Antriebsachse mit Schlupf arbeitet. Denkbar ist jedoch ebenfalls eine automatische Schaltung anstelle des handbetätigten Schalters 17, etwa bei Ansteuerung durch einen, die Drehbewegung der Antriebsräder überwachenden Sensor, auch innerhalb einer Antischlupfregelung. Durch Betätigung des Schalters 17 wird in der elektronischen Steuereinheit 8 ein Einschaltsignal initiiert, als Folge dessen die elektronische Steuereinheit 8 dem Steuerventil 14 ein erstes Schaltsignal zuführt; das Steuerventil 14 schaltet dadurch in seine zweite Stellung. In dieser zweiten Stellung wird die Verbindung zwischen den Bälgen 1 der Antriebsachse und den Bälgen 2 der Nachlaufachse unterbrochen, der Druck in den Bälgen 1 der Antriebsachse wird gegen die Atmosphäre abgesperrt und gleichzeitig werden die Bälge 2 der Nachlaufachse in die Atmosphäre entlüftet. Der Druck in den Bälgen 2 der Nachlaufachse fällt dadurch ab, was jedoch gleichzeitig einen Druckanstieg in den Bälgen 1 der Antriebsachse bewirkt, da die bisher auf beide Achsen verteilte Fahrzeug- und Nutzlast nun in höheren Maße die Antriebsachse beaufschlagt.

Damit es zu keiner Überlastung der Antriebsachse kommt, darf dieser Prozeß des Druckabfalls in den Bälgen 2 der Nachlaufachse und des Druckanstiegs in den Bälgen 1 der Antriebsachse nicht beliebig fortschreiten. Dazu wird erfindungsgemäß nach Erreichen eines vorgegebenen oberen Druckwertes in den Bälgen 1 der Antriebsachse das Steuerventil 14 in seine erste Stellung zurückgeschaltet. Das Schaltsignal hierzu wird wiederum durch die elektronische Steuereinheit 8 abgegeben. Zur Messung des Druckes in den Bälgen 1 der Antriebsachse ist an mindestens einem der mit den Bälgen 1 der Antriebsachse in Verbindung stehenden Drucksysteme ein Drucksensor 19 angeschlossen. Dieser mißt den in dem jeweiligen Balg 1 der Antriebsachse herrschenden Druck und gibt den Meßwert in Form eines elektrischen Signals an die elektronische Steuereinheit 8 weiter.

Nach dem beschriebenen Zurückschalten des Steuerventils 14 in seine erste Stellung kommt es zu einem Druckanstieg in den Bälgen 2 der Nachlaufachse, da die jeweiligen Bälge 1 der Antriebsachse und Bälge 2 der Nachlaufachse einer Fahrzeugseite wiederum miteinander in Verbindung stehen und somit Druckluft aus den Bälgen 1 der Antriebsachse in die Bälge 2 der Nachlaufachse überströmen kann. Dabei kann es zu einem Verlust von Luftvolumen in den Bälgen 1 der Antriebsachse kommen, was durch Nachförderung von Luft durch das Öffnen der Niveauregelventile 3 kompensiert werden kann. In einem solchen Fall öffnen sich die Niveauregelventile 3, weil durch die Abgabe von Druckluft aus den Bälgen 1 der Antriebsachse in die Bälge 2 der Nachlaufachse das allgemeine Niveau des Fahrzeugaufbaus sinkt, was durch die Wegsensoren 7 gemessen wird und in Form von elektrischen Signalen der elektronischen Steuereinheit 8 zugewiesen wird. Die elektronische Steuereinheit 8 öffnet daraufhin die Niveauregelventile 3, bis das gewünschte Fahrzeugniveau wieder erreicht ist.

Durch den Druckanstieg in den Bälgen 2 der Nachlaufachse kommt es zur Übernahme eines größeren Anteiles der Fahrzeuglast und Fahrzeugnutzlast durch die Nachlaufachse unter gleichzeitiger teilweise Entlastung der Antriebsachse.

Diese Entlastung der Antriebsachse führt zu einem Druckabfall in den Bälgen 1 der Antriebsachse. Wird durch diesen Druckabfall ein vorgegebener unterer Wert erreicht (was der elektronischen Steuereinheit 8 durch den Drucksensor 19 gemeldet wird), so wird das Steuerventil 14 durch die elektronische Steuereinheit 8 wiederum in seine zweite Stellung geschaltet.

Das beschriebene Hin- und Herschalten des Steuerventiles 14 zwischen seiner ersten und zweiten Stellung wird so lange durch die elektronische Steuereinheit 8 initiiert, bis entweder durch Handbetätigung des Schalters 17 oder durch eine in der elektronischen Steuereinheit 8 vorgesehene Zeitschaltung dieser Vorgang beendet wird. In beiden Fällen wird das Steuerventil 14 abschließend in seine erste Stellung gebracht, die Bälge 1 der Antriebsachse sowie die Bälge 2 der Nachlaufachse werden dadurch jeweils wieder pneumatisch verbunden und weisen den gleichen Druck auf, Fahrzeuglast und Nutzlast werden in ursprünglicher Größe auf Antriebsachse und Nachlaufachse aufgeteilt. Die Frequenz, mit welcher das Steuerventil 14 zwischen erster und zweiter Stellung hin- und herschaltet, ist abhängig von der Geschwindigkeit, mit der sich der Druck in den Bälgen 1 der Antriebsachse auf- und abbaut. Da wiederum die Geschwindigkeit, mit der sich der Druck in den Bälgen 1 der Antriebsachse auf- und abbaut, abhängig ist von der Größe des engsten Überströmquerschnittes zwischen jenem Drucksystem, welches mit den Bälgen 1 der Antriebsachse in Verbindung steht und jenem Drucksystem, welches mit den Bälgen 2 der Nachlaufachse in Verbindung steht, läßt sich durch die Dimensionierung der Größe dieses engsten Überströmquerschnittes die Schaltfrequenz, mit der das Steuerventil 14 arbeitet, einstellen.

Es soll betont werden, daß die Ansteuerung des Steuerventils 14 nicht unbedingt elektrisch durch die elektronische Steuereinheit 8 erfolgen muß. Es ist auch denkbar, daß der mindestens eine Drucksensor 19 auf mechanischem Wege das Steuerventil 14 jeweils dann betätigt, wenn ein vorgegebener oberer bzw. unterer Druckwert erreicht ist. Bei einer solchen mechanischen Funktionsweise der erfindungsgemäßen Vorrichtung wird der Schalter 17, wenn dieser unbetätigt ist, das Steuerventil 14 in seiner ersten Stellung sperren und, wenn dieser betätigt ist, das Steuerventil 14 entsperren.

Die Größen von oberem und unterem Druckwert, bei welchen jeweils eine Umschaltung des Steuerventils 14 vorgenommen wird, können innerhalb der elektronischen Steuereinheit 8 als Vergleichswerte gespeichert sein. Sobald die durch den Drucksensor 19 übermittelten Druckwerte mit den Vergleichswerten übereinstimmen, gibt die elektronische Steuereinheit 8 ein Schaltsignal an das Steuerventil 14 weiter. Es ist aber ebenfalls möglich, die Größen von oberem und unterem Druckwert innerhalb des Drucksensors 19 festzulegen. Dazu gibt der Drucksensor 19 ein erstes elektrisches Signal an die elektronische Steuereinheit 8 ab, wenn der obere Druckwert vorliegt und ein zweites elektrisches Signal ab, wenn der untere Druckwert vorliegt.

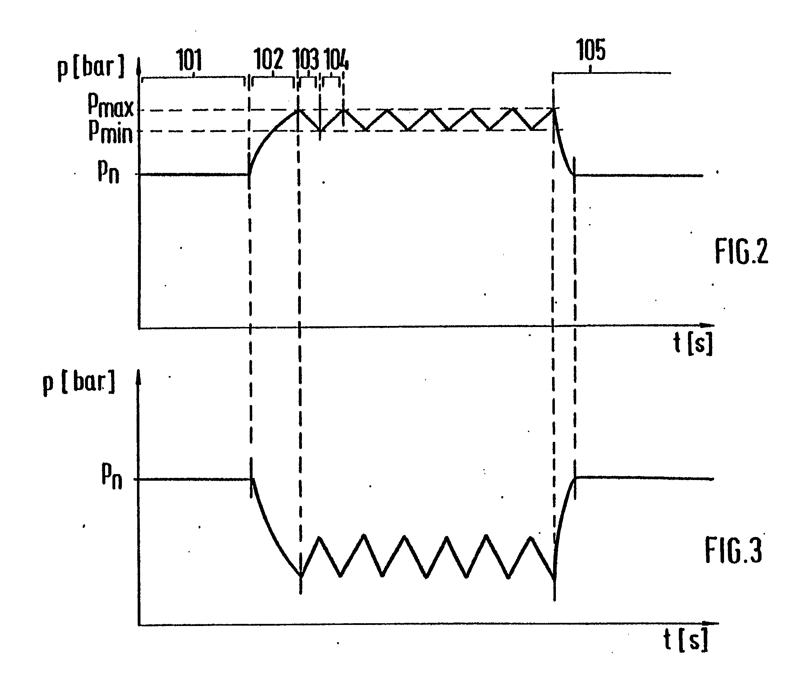

Figur 2 und Figur 3 zeigen in Form von Diagrammen den Druckverlauf in den Bälgen 1 der Antriebsachse (Figur 2) bzw. den Druckverlauf in den Bälgen 2 der Nachlaufachse (Figur 3). Im normalen Fahrzustand eines mit der erfindungsgemäßen Vorrichtung ausgestatteten Kraftfahrzeuges befindet sich das Steuerventil 14 in seiner ersten Stellung, in den Bälgen 1 der Antriebsachse sowie in den Bälgen 2 der Nachlaufachse herrscht der gleiche Druck $p_n$; in Figur 2 ist dieser Bereich mit dem Bezugszeichen 101 versehen. Nach Betätigung des Schalters 17 und Schalten des Steuerventils 14 in seine zweite Stellung steigt der Druck in den Bälgen 1 der Antriebsachse stark an (102), bis jener Druck $p_{max}$ erreicht ist, welcher die Obergrenze des zulässigen Drucks in den Bälgen 1 der Antriebsachse darstellt. Die Information, daß dieser Druckwert erreicht ist, wird durch den Drucksensor 19 an die elektronische Steuereinheit 8 weitergegeben. Die elektronische Steuereinheit 8 schaltet daraufhin das Steuerventil 14 zurück in seine erste Stellung. Der Druck in den Bälgen 2 der Nachlaufachse steigt an, dies bewirkt einen Druckabfall in den Bälgen 1 der Antriebsachse (103), bis durch den Drucksensor 19 der untere Grenzdruck $p_{min}$ an die elektronische Steuereinheit 8 signalisiert wird. Die elektronische Steuereinheit 8 schaltet daraufhin das Steuerventil 14 wieder in die zweite Stellung (104). Dieser Vorgang wiederholt sich fortlaufend, der Druck in den Bälgen 1 der Antriebsachse ändert sich immer zwischen den Extremwerten $p_{max}$ und $p_{min}$.

Figur 3 zeigt den zeitgleichen Druckverlauf in den Bälgen 2 der Nachlaufachse. Da bei Vernachlässigung der Vorderachse die Gesamtlast des Kraftfahrzeuges sich auf Antriebsachse sowie Nachlaufachse verteilt, geht ein Druckanstieg in den Bälgen 1 der Antriebsachse einher mit einem Druckabfall in den Bälgen 2 der Nachlaufachse und umgekehrt. Das Diagramm nach Figur 3 ähnelt daher spiegelbildlich dem Diagramm nach Figur 2.

Bezugszeichen 105 in Figur 2 kennzeichnet den Verlauf des Drucks in den Bälgen 1 der Antriebsachse nach dem Ausschalten der erfindungsgemäßen Vorrichtung, sei es durch Handbetätigung mittels des Schalters 17 oder durch die oben erwähnte Zeitschaltung. Nach kurzer Zeit weisen sowohl die Bälge 1 der Antriebsachse als auch die Bälge 2 der Nachlaufachse wieder den gleichen Normaldruck $p_n$ auf.

**Patentansprüche**

1. Vorrichtung zur Entlastung der Nachlaufachse eines luftgefederten Fahrzeuges mit mehreren Hinterachsen, von denen mindestens eine Hinterachse als Antriebsachse und mindestens eine weitere Hinterachse als nicht angetriebene Nachlaufachse dient
- mit zwischen den Hinterachsen und dem Fahrzeugaufbau angeordneten und als federnde Elemente wirkenden Bälgen (2)
- mit mindestens einem den Luftdruck in den Bälgen (1) der Antriebsachse aufnehmenden Drucksensor (19)
- mit einem zwischen den Bälgen der Antriebsachse und den Bälgen der Nachlaufachse angeordneten Steuerventil (14), welches in einer ersten Stellung die Bälge der Antriebsachse und die Bälge der Nachlaufachse miteinander verbindet und welches in einer zweiten Stellung die Bälge der Nachlaufachse mit der Atmosphäre verbindet,
dadurch gekennzeichnet,
daß das Steuerventil (14) ein druckabhängig schaltbares 2-Stellungs-Ventil ist, welches in seine zweite Stellung schaltbar ist, wenn am Drucksensor (19) ein vorgegebener unterer Druckwert erreicht ist und in seine erste Stellung schaltbar ist, wenn am Drucksenor (19) ein vorgegebener oberer Druckwert erreicht ist.

2. Vorrichtung nach Anspruch 1, gekennzeichnet durch eine elektronische Steuereinheit (8), welcher vom Drucksensor (19) elektrische Signals zugewiesen werden und welche
- das Steuerventil (14) in seine zweite Stellung schaltet, wenn der Drucksensor (19) ein Signal abgibt, das einem vorgegebenen unteren Druckwert entspricht und welche
- das Steuerventil (14) in seine erste Stellung schaltet, wenn der Drucksensor (19) ein Signal abgibt, das einem vorgegebenen oberen Druckwert entspricht.

3. Vorrichtung nach Anspruch 2, dadurch gekennzeichnet, daß die Größe der dem unteren und dem oberen Druckwert entsprechenden Signale innerhalb der elektronischen Steuereinheit (8) festgelegt ist.

4. Vorrichtung nach Anspruch 2, dadurch gekennzeichnet, daß der Drucksensor (19) ein erstes elektrisches Signal erzeugt, wenn der obere Druckwert vorliegt und ein zweites elektrisches Signal erzeugt, wenn der untere Druckwert vorliegt.

**Revendications**

1. Dispositif pour décharger l'essieu traîné d'un véhicule à suspension pneumatique comportant plusieurs essieux arrière parmi lesquels au moins un essieu est un essieu-moteur et au moins un autre un essieu traîné,
- des soufflets (2) fonctionnant comme des ressorts, entre l'essieu avant et la carrosserie,
- au moins un capteur de pression (19) détectant la pression de l'air dans les soufflets (1) de l'essieu-moteur,
- une soupape à tiroirs de commande (14) montée entre les soufflets de l'essieu-moteur et les soufflets de l'essieu traîné, soupape à tiroirs qui, dans une première position relie les soufflets de l'essieu-moteur et les soufflets de l'essieu traîné et qui dans une seconde position fait communiquer les soufflets de l'essieu traîné avec l'atmosphère, caractérisé en ce que:
la soupape à tiroirs de commande (14) est une soupape à tiroirs à deux positions, commutée en fonction de la pression, cette soupape à tiroirs commutant dans sa seconde position lorsque le capteur de pression (19) détecte une limite inférieure prédéterminée de pression, cette soupape à tiroirs passant dans sa première position lorsque le capteur de pression (19) détecte une limite supérieure prédéterminée de pression.

2. Dispositif selon la revendication 1, caractérisé par une unité électronique de commande (8) qui reçoit des signaux électriques du capteur de pression (19) et:
- la soupape à tiroirs de commande (14) passant dans sa seconde position, lorsque le capteur de pression (19) émet un signal qui correspond à une limite inférieure prédéterminée de pression et,
- la soupape à tiroirs de commande (14) passe dans sa première position lorsque le capteur de pression (19) émet un signal qui correspond à une limite supérieure prédéterminée de pression.

3. Dispositif selon la revendication 2, caractérisé en ce que l'amplitude des signaux correspondant à la limite inférieure et à la limite supérieure de la pression est fixée dans l'unité de commande électronique (14).

4. Dispositif selon la revendication 2, caractérisé en ce que le capteur de pression (19) génère un premier signal électrique lorsqu'il existe la limite supérieure de pression et un second signal électrique, lorsqu'il existe la limite inférieure de pression.

**Claims**

1. Device for relieving the trailing axle of an air-suspension vehicle with several rear axles, of which at least one rear axle serves as a driving axle and at least one further rear axle serves as a nondriven trailing axle, with bellows (2) arranged between the rear axles and the vehicle body and acting as resilient elements, with at least one pressure sensor (19) recording the air pressure in the bellows (1) of the driving axle, and with a control valve (14) which is arranged between the bellows of the driving axle and the bellows of the trailing axle and which, in a first position, connects the bellows of the driving axle and the bellows of the trailing axle to one another and, in second position, connects the bellows of the trailing axle to the atmosphere, characterized in that the control valve 14 is a pressure-dependently switchable two-position valve which is switchable into its second position when a predetermined lower pressure value is reached on the pressure sensor (19) and is switchable into its first position when a predetermined upper pressure value is reached on the pressure sensor (19).

2. Device according to claim 1, characterized by an electronic control unit (8) to which electrical signals are assigned from the pressure sensor (19) and which switches the control valve (14) into its second position when the pressure sensor (19) emits a signal corresponding to a predetermined lower pressure value and which switches the control valve (14) into its first position when the pressure sensor (19) emits a signal corresponding to a predetermined upper pressure value.

3. Device according to claim 2, characterized in that the size of the signals corresponding to the lower and the upper pressure value is set within the electronic control unit (8).

4. Device according to claim 2, characterized in that the pressure sensor (19) generates a first electrical signal when the upper pressure value is present and generates a second electrical signal when the lower pressure is present.

FIG.1

FIG.2

FIG.3

EP 0 238 891 B1